# EUROPÄISCHE PATENTSCHRIFT

(11) **EP 3 496 971 B1**
(45) Veröffentlichungstag und Bekanntmachung des Hinweises auf die Patenterteilung: **21.10.2020**
(21) Anmeldenummer: 17755091.0
(22) Anmeldetag: 07.08.2017
(51) Int. Cl.: B60N 2/07, B60N 2/08, B60N 2/075

(54) **SCHIENENSYSTEM FÜR EINEN FAHRZEUGSITZ**
RAIL SYSTEM FOR A VEHICLE SEAT
SYSTÈME DE RAILS POUR SIÈGE DE VÉHICULE

(30) Priorität: 08.08.2016 DE 102016214669; 20.09.2016 DE 102016217945
(43) Veröffentlichungstag der Anmeldung: 19.06.2019
(73) Patentinhaber: Adient Luxembourg Holding S.à r.l., 1855 Luxembourg (LU)
(72) Erfinder: SPRENGER, Erik, 42929 Wermelskirchen (DE)
(74) Vertreter: Liedtke & Partner Patentanwälte
(86) Internationale Anmeldenummer: PCT/EP2017/069957
(87) Internationale Veröffentlichungsnummer: WO 2018/029149

(56) Entgegenhaltungen:
- EP-A1- 0 685 358
- EP-A1- 0 834 419
- EP-A1- 2 614 985

## Beschreibung

Die Erfindung betrifft ein Schienensystem für einen Fahrzeugsitz.

Ein Schienensystem eines Fahrzeugsitzes weist üblicherweise eine fahrzeugfeste Unterschiene und eine fest mit dem Fahrzeugsitz verbundene Oberschiene auf. Die Oberschiene ist gegenüber der Unterschiene längsverstellbar und in Längspositionen verriegelbar, um Längsverstellungen des Fahrzeugsitzes zu ermöglichen.

EP 0 834 419 A1 offenbart eine Sitzschienenanordnung zum gleitenden Verstellen eines Sitzes, insbesondere eines Kraftfahrzeugsitzes. Die Sitzschienenanordnung umfasst eine Unterschiene, eine verschiebbare Oberschiene und ein Gleitelement, das zwischen einer Kontaktfläche der Unterschiene und einer Unterseite einer Tragwand der Oberschiene angeordnet ist.

Aufgabe der vorliegenden Erfindung ist es, ein verbessertes Schienensystem für einen Fahrzeugsitz und einen Gleitblock für ein Schienensystem anzugeben.

Die Aufgabe wird erfindungsgemäß hinsichtlich des Gleitblocks durch die Merkmale des Anspruchs 1 und hinsichtlich des Schienensystems durch die Merkmale des Anspruchs 4 gelöst.

Ausgestaltungen der Erfindung sind Gegenstand der Unteransprüche.

Ein erfindungsgemäßes Schienensystem für einen Fahrzeugsitz umfasst eine Unterschiene, eine Oberschiene, einen Gleitblock und wenigstens einen Wälzkörperkäfig mit Wälzkörpern. Der Gleitblock ist starr mit der Unterschiene verbunden und weist Endanschläge für den Wälzkörperkäfig auf. Der Wälzkörperkäfig ist relativ zu dem Gleitblock parallel zu einer Längsachse der Unterschiene zwischen zwei durch die Endanschläge definierten Endstellungen bewegbar und über die Wälzkörper an die Unterschiene gekoppelt. Die Oberschiene ist an dem Gleitblock entlang der Längsachse der Unterschiene bewegbar gelagert und an den Wälzkörperkäfig gekoppelt.

Beim erfindungsgemäßen Schienensystem ist die Oberschiene durch den Gleitblock und den Wälzkörperkäfig mit den Wälzkörpern an die Unterschiene gekoppelt. Der Gleitblock wirkt dabei als ein Gleitlager, das vorteilhaft hohen Belastungen ausgesetzt werden kann, ohne durch Brinellierungen beeinträchtigt zu werden, die beispielsweise bei hohen Belastungen von Wälzlagern auftreten können.

Ein erfindungsgemäßer Gleitblock ist als ein separates und variabel einsetzbares Bauteil für das Schienensystem ausgebildet. Der Gleitblock ist ein insbesondere H-förmiges Profilbauteil, das mindestens ein Fixierungselement und mindestens einen Endanschlag umfasst.

Ferner weist der Gleitblock zwei zueinander parallele Gleitblockholme zur bewegbaren Lagerung der Oberschiene und wenigstens eine die beiden Gleitblockholme leiterartig miteinander verbindende Gleitblocksprosse auf. Die Lagerung der Oberschiene an den Gleitblockholmen verringert vorteilhaft die Reibung der Oberschiene mit dem Gleitblock gegenüber einer großflächigen Lagerung der Oberschiene an dem Gleitblock. Die Endanschläge für einen Wälzkörperkäfig stehen dabei jeweils nach außen von einem Gleitblockholm ab, d. h. auf einer von der Gleitblocksprosse abgewandten Seite des Gleitblockholms, so dass die Positionen der Endanschläge und der Gleitblocksprosse vorteilhaft unabhängig voneinander vorgesehen werden können.

Mittels des Fixierungselementes ist der Gleitblock vorteilhaft variabel in eine der Schienen positionier- und fixierbar. Beispielsweise weist wenigstens eine Gleitblocksprosse eine von ihrer Unterseite abstehende Fixierungsnase zur Fixierung der Position des Gleitblocks an einer Unterschiene des Schienensystems auf.

Der separate Gleitblock definiert durch die Endanschläge die Endstellungen des Wälzkörperkäfigs, so dass die Unterschiene keine Endanschläge für den Wälzkörperkäfig aufzuweisen braucht. Dadurch entfallen vorteilhaft zusätzliche Arbeitsgänge und Umformungen an der Unterschiene. Außerdem entfallen sichtbare Lackschäden an der Unterschiene, die typisch an der Unterschiene entstehen, wenn die Unterschiene einen Endanschlag im Sichtbereich aufweist, insbesondere wenn der Endanschlag nach der Montage gefertigt wird.

Eine Ausgestaltung des Schienensystems sieht vor, dass das Schienensystem zwei Wälzkörperkäfige mit Wälzkörpern aufweist, die an sich gegenüberliegenden Seiten des Gleitblocks angeordnet sind, jeweils relativ zu dem Gleitblock parallel zu der Längsachse der Unterschiene zwischen zwei durch Endanschläge des Gleitblocks definierten Endstellungen bewegbar sind, und an die Oberschiene und über die Wälzkörper an die Unterschiene gekoppelt sind. Zwei an sich gegenüberliegenden Seiten des Gleitblocks angeordnete Wälzkörperkäfige ermöglichen vorteilhaft eine stabilere Kopplung der Oberschiene an die Unterschiene über die Wälzkörperkäfige als nur ein Wälzkörperkäfig.

Eine weitere Ausgestaltung des Schienensystems sieht vor, dass jeder Wälzkörperkäfig einen dem Gleitblock zugewandten Kontaktabschnitt aufweist, der zu der Längsachse der Unterschiene abgewinkelt ist, zwischen zwei Endanschlägen des Gleitblocks verläuft und in den beiden Endstellungen des Wälzkörperkäfigs an jeweils einem der Endanschläge anschlägt. Die zu der Längsachse der Unterschiene abgewinkelte Form des Kontaktabschnitts ermöglicht eine Anordnung des Wälzkörperkäfigs an einer Seite des Gleitblocks, so dass der Wälzkörperkäfig der Lagerung der Oberschiene an dem Gleitblock nicht im Wege steht bzw. diese Lagerung erleichtert.

Eine weitere Ausgestaltung des Schienensystems sieht vor, dass zumindest ein Endanschlag, an dem ein Kontaktabschnitt in einer Endstellung des Wälzkörperkäfigs anschlägt, an einem Ende des Gleitblocks angeordnet ist und ein rampenartiges Anschlagende aufweist, das eine zu dem Ende des Gleitblocks abfallende oberseitige Oberfläche aufweist, und dass der Kontaktabschnitt aus einem elastisch verformbaren Material gefertigt ist, so dass der Kontaktabschnitt beim Gleiten vom Ende des Gleitblocks über das rampenartige Anschlagende elastisch nach innen gebogen wird und nach Passieren des Endanschlags wieder seine ursprüngliche Form annimmt. Diese Ausgestaltung des Schienensystems erleichtert vorteilhaft die Montage des Schienensystems, indem sie es ermöglicht, den Wälzkörperkäfig nach der Befestigung des Gleitblocks an der Unterschiene zusammen mit der Oberschiene von einem Ende des Gleitblocks in die Unterschiene mit dem an ihr befestigten Gleitblock einzuschieben.

Eine weitere Ausgestaltung des Schienensystems sieht vor, dass die Unterschiene einen Unterschienenboden und für jeden Wälzkörperkäfig eine von dem Unterschienenboden abgewinkelte Unterschienenflanke und einen von der Unterschienenflanke nach innen und nach unten abgewinkelten Unterschienenendabschnitt aufweist, und dass der Wälzkörperkäfig sich in den Raumbereich zwischen der Unterschienenflanke und dem Unterschienenendabschnitt hinein erstreckt und die Wälzkörper des Wälzkörperkäfigs an dem nach innen abgewinkelten Bereich des Unterschienenendabschnitts anliegen. Gemäß dieser Ausgestaltung des Schienensystems bilden eine Unterschienenflanke und ein Unterschienenendabschnitt der Unterschiene vorteilhaft eine Tasche für einen Wälzkörperkäfig, die die Position des Wälzkörperkäfigs definiert und stabilisiert und gleichzeitig eine Anlagefläche für die Wälzkörper des Wälzkörperkäfigs bietet.

Ausführungsbeispiele der Erfindung werden anhand von Zeichnungen näher erläutert. Dabei zeigen:
- Figur 1: eine Schnittdarstellung eines Schienensystems für einen Fahrzeugsitz,
- Figur 2: eine perspektivische Darstellung eines Gleitblocks,
- Figur 3: eine perspektivische Darstellung einer Unterschiene und eines an der Unterschiene befestigten Gleitblocks,
- Figur 4: eine perspektivische Darstellung eines Gleitblocks und zweier Wälzkörperkäfige mit Wälzkörpern,
- Figur 5: eine erste perspektivische Darstellung eines Schienensystems für einen Fahrzeugsitz in einer Montageposition einer Oberschiene und zweier Wälzkörperkäfige mit Wälzkörpern,
- Figur 6: eine zweite perspektivische Darstellung eines Schienensystems für einen Fahrzeugsitz in einer Montageposition einer Oberschiene und zweier Wälzkörperkäfige mit Wälzkörpern, und
- Figur 7: eine Schnittdarstellung eines Schienensystems für einen Fahrzeugsitz während der Montage einer Oberschiene und zweier Wälzkörperkäfige mit Wälzkörpern.

Einander entsprechende Teile sind in allen Figuren mit den gleichen Bezugszeichen versehen.

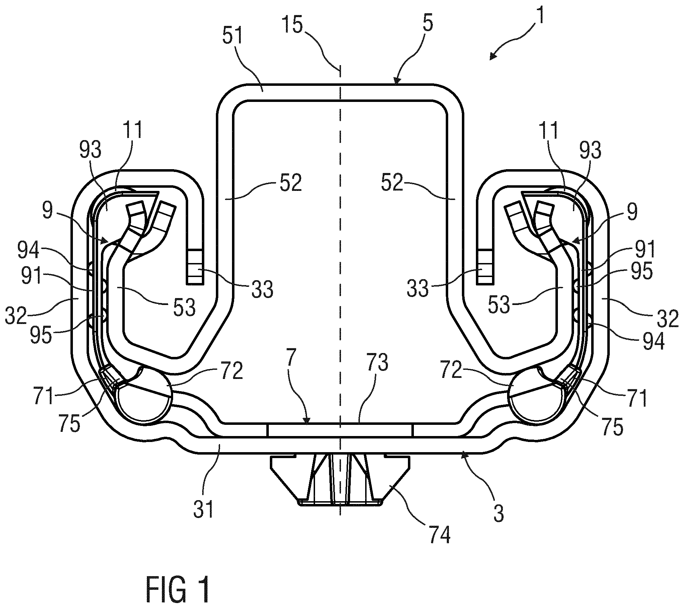

**Figur 1** zeigt eine Schnittdarstellung eines Schienensystems 1 für einen Fahrzeugsitz eines Fahrzeugs.

Das Schienensystem 1 umfasst eine Unterschiene 3, eine Oberschiene 5, einen Gleitblock 7 und zwei Wälzkörperkäfige 9 mit jeweils mehreren beispielsweise als Kugeln oder Rollen ausgeführten Wälzkörpern 11.

Der Gleitblock 7 ist als ein separates Bauteil ausgebildet. Der Gleitblock 7 ist starr mit der Unterschiene 3 verbunden und weist Endanschläge 71 für jeden Wälzkörperkäfig 9 auf.

Jeder Wälzkörperkäfig 9 ist relativ zu dem Gleitblock 7 entlang einer Längsachse 13 der Unterschiene 3 zwischen zwei durch die Endanschläge 71 definierten Endstellungen bewegbar und über die Wälzkörper 11 an die Unterschiene 3 gekoppelt.

Die Oberschiene 5 ist an dem Gleitblock 7 entlang der Längsachse 13 der Unterschiene 3 bewegbar gelagert und an den Wälzkörperkäfig 9 gekoppelt.

Das Schienensystem 1 ist zumindest annähernd ebenensymmetrisch mit einer die Längsachse 13 enthaltenen Symmetrieebene 15 ausgeführt, die senkrecht auf der Zeichenebene der Figur 1 steht.

Die Unterschiene 3 wird starr mit dem Fahrzeug oder mit einem Boden einer den Fahrzeugsitz aufweisenden Insassenzelle des Fahrzeugs verbunden. Die Oberschiene 5 wird starr mit dem Fahrzeugsitz verbunden.

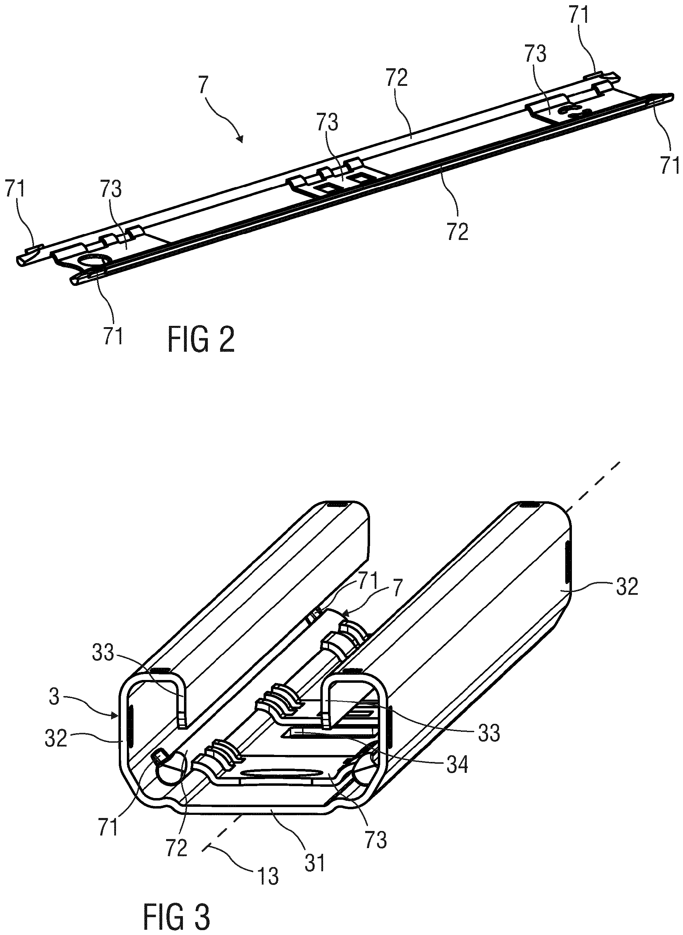

**Figur 2** zeigt eine perspektivische Darstellung des Gleitblocks 7.

**Figur 3** zeigt eine perspektivische Darstellung der Unterschiene 3 und des an der Unterschiene 3 befestigten Gleitblocks 7.

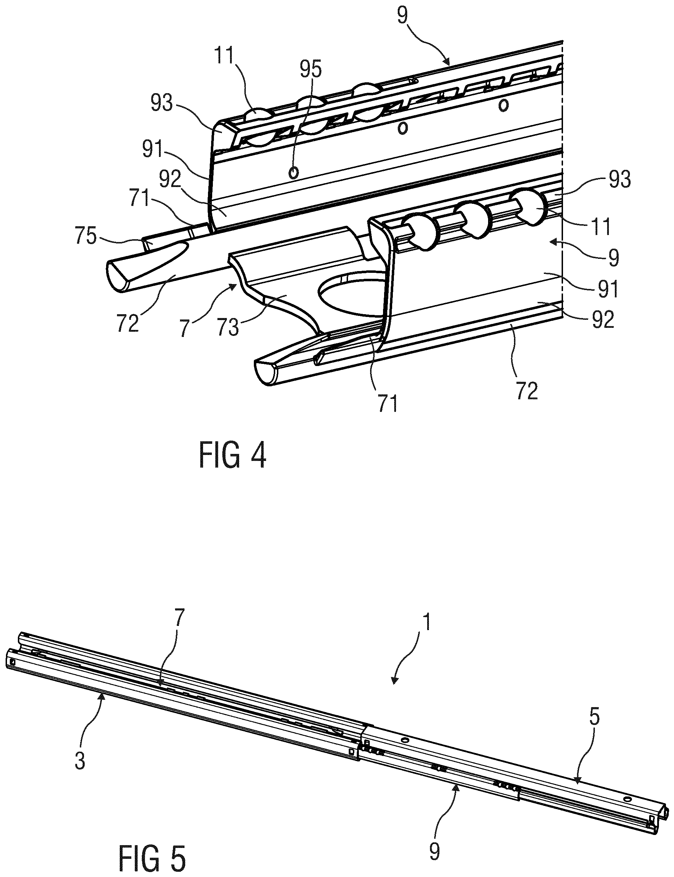

**Figur 4** zeigt eine perspektivische Darstellung des Gleitblocks 7 und der Wälzkörperkäfige 9 mit den Wälzkörpern 11 in einer Endstellung des Wälzkörperkäfigs 9.

Die Unterschiene 3 weist einen Unterschienenboden 31 und auf jeder Seite der Symmetrieebene 15 eine von dem Unterschienenboden 31 abgewinkelte Unterschienenflanke 32 und einen von der Unterschienenflanke 32 nach innen, d. h. zu der Symmetrieebene 15 hin, und nach unten, d. h. zu dem Unterschienenboden 31 hin, abgewinkelten Unterschienenendabschnitt 33 auf.

Die Oberschiene 5 weist einen Oberschienenmittelabschnitt 51 und auf jeder Seite der Symmetrieebene 15 eine von dem Oberschienenmittelabschnitt 51 abgewinkelte Oberschienenflanke 52 und einen von der Oberschienenflanke 52 nach außen, d. h. von der Symmetrieebene 15 weg, und nach oben, d. h. von dem Unterschienenboden 31 weg, abgewinkelten Oberschienenendabschnitt 53 auf. Der Oberschienenmittelabschnitt 51 verläuft oberhalb der Unterschiene 3 parallel zu dem

Unterschienenboden 31. Jede Oberschienenflanke 52 weist einen zwischen den Unterschienenendabschnitten 33 verlaufenden Bereich auf. Jeder Oberschienenendabschnitt 53 ragt in einen Raumbereich hinein, der zwischen einer Unterschienenflanke 32 und dem von ihr abgewinkelten Unterschienenendabschnitt 33 liegt.

Die Oberschiene 5 und die Unterschiene 3 sind beispielsweise jeweils aus einem metallischen Werkstoff gefertigt.

Der Gleitblock 7 ist leiterartig mit zwei zueinander parallelen Gleitblockholmen 72 und die beiden Gleitblockholme 72 miteinander verbindenden Gleitblocksprossen 73 ausgeführt.

Jeder Gleitblockholm 72 weist zwei nach außen von ihm abstehende Endanschläge 71 auf, die an sich gegenüberliegenden Endbereichen des Gleitblockholms 72 angeordnet sind. Die Gleitblockholme 72 verlaufen parallel zu der Längsachse 13 der Unterschiene 3. Die Gleitblockholme 72 stützen die Oberschiene 5, wobei ein unterer Bereich jedes Oberschienenendabschnitts 53 an einem Gleitblockholm 72 anliegt.

Die Gleitblocksprossen 73 liegen an einer der Oberschiene 5 zugewandten Oberfläche des Unterschienenbodens 31 an. Die Gleitblocksprossen 73 weisen von ihren Unterseiten abstehende Fixierungsnasen 74 auf, die in dazu korrespondierende Bodenausnehmungen 34 in dem Unterschienenboden 31 eingreifen und dadurch die Position des Gleitblocks 7 in der Unterschiene 3 fixieren.

Der Gleitblock 7 ist beispielsweise aus einem Kunststoff gefertigt.

Die Wälzkörperkäfige 9 sind auf verschiedenen Seiten der Symmetrieebene 15 angeordnet. Jeder Wälzkörperkäfig 9 ist in einem Raumbereich zwischen einem Gleitblockholm 72, einer Unterschienenflanke 32 und einem Oberschienenendabschnitt 53 angeordnet. Dabei verläuft ein Käfigmittelabschnitt 91 des Wälzkörperkäfigs 9 zwischen der Unterschienenflanke 32 und dem Oberschienenendabschnitt 53.

Nach unten schließt sich an den Käfigmittelabschnitt 91 ein dem Gleitblockholm 72 zugewandter Kontaktabschnitt 92 des Wälzkörperkäfigs 9 an. Der Kontaktabschnitt 92 ist nach innen zu der Längsachse 13 der Unterschiene 3 von dem Käfigmittelabschnitt 91 abgewinkelt, verläuft zwischen den Endanschlägen 71 des Gleitblockholms 72 und schlägt in den beiden Endstellungen des Wälzkörpers 11 an jeweils einem der Endanschläge 71 an (siehe Figur 4).

Nach oben schließt sich an den Käfigmittelabschnitt 91 ein die Wälzkörper 11 tragender Trägerabschnitt 93 des Wälzkörperkäfigs 9 an. Die Oberflächen der Wälzkörper 11 ragen oben aus dem Trägerabschnitt 93 heraus und liegen an dem von der Unterschienenflanke 32 nach innen abgewinkelten Bereich des Unterschienenendabschnitts 33 der Unterschiene 3 an.

Der Käfigmittelabschnitt 91 des Wälzkörperkäfigs 9 weist unterschienenflankenseitige erste Abstandsnasen 94 und oberschienenendabschnittseitige zweite Abstandsnasen 95 auf, die ein flächiges Anliegen des Käfigmittelabschnitts 91 an der Unterschienenflanke 32 und dem Oberschienenendabschnitt 53 verhindern.

Die Oberschiene 5 ist beispielsweise starr mit den Wälzkörperkäfigen 9 verbunden. Alternativ ist auch die Oberschiene 5 relativ zu den Wälzkörperkäfigen 9 bewegbar gelagert, indem sie unten an den Wälzkörpern 11 anliegt.

Zur Montage des Schienensystems 1 wird zunächst der Gleitblock 7 in der Unterschiene 3 befestigt. Anschließend werden die Oberschiene 5 und die Wälzkörperkäfige 9 gleichzeitig in die Unterschiene 3 mit dem daran befestigten Gleitblock 7 geschoben. Um diese Montage zu ermöglichen, weisen zumindest die Endanschläge 71 an einem Ende des Gleitblocks 7 jeweils ein rampenartiges Anschlagende 75 auf, das eine zu diesem Ende des Gleitblocks 7 abfallende oberseitige Oberfläche aufweist, d. h. eine oberseitige Oberfläche, deren Flächennormale eine zu diesem Ende gerichtete Komponente aufweist.

Ferner ist jeder Wälzkörperkäfig 9 zumindest im Bereich seines Kontaktabschnitts 92 aus einem elastisch verformbaren Material gefertigt, so dass der Kontaktabschnitt 92 beim Gleiten über das rampenartige Anschlagende 75 elastisch nach innen gebogen wird und nach Passieren des Endanschlags 71 wieder seine ursprüngliche Form annimmt und zwischen den Endanschlägen 71 des jeweiligen Gleitblockholms 72 angeordnet ist.

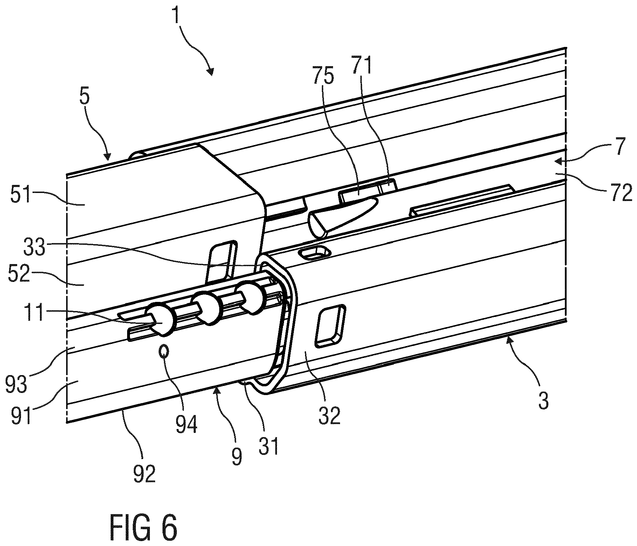

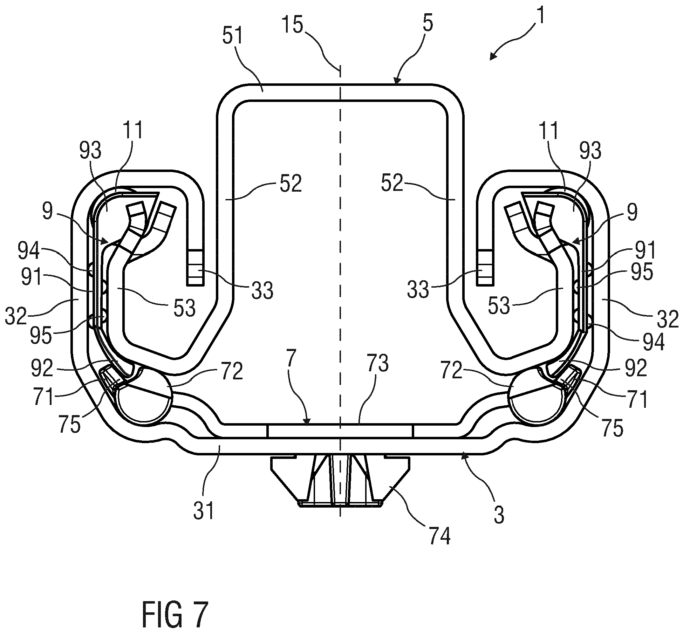

Die **Figuren 5 bis 7** illustrieren die beschriebene Montage des Schienensystems 1. Die Figuren 5 und 6 zeigen perspektivische Darstellungen des Schienensystems 1 in einer Montageposition der Oberschiene 5 und der Wälzkörperkäfige 9 mit den Wälzkörpern 11 vor bzw. zu Beginn des Einschiebens der Oberschiene 5 und der Wälzkörperkäfige 9 in die Unterschiene 3 mit dem daran befestigten Gleitblock 7. Figur 7 zeigt eine Schnittdarstellung des Schienensystems 1 während der Montage der Oberschiene 5 und der Wälzkörperkäfige 9 mit den Wälzkörpern 11, wobei die Kontaktabschnitte 92 der Wälzkörperkäfige 9 über die rampenartigen Anschlagenden 75 der Endanschläge 71 gleiten und von diesen nach innen gebogen werden.

### Bezugszeichenliste

- 1: Schienensystem
- 3: Unterschiene
- 5: Oberschiene
- 7: Gleitbock
- 9: Wälzkörperkäfig
- 11: Wälzkörper
- 13: Längsachse
- 15: Symmetrieebene
- 31: Unterschienenboden
- 32: Unterschienenflanke
- 33: Unterschienenendabschnitt
- 34: Bodenausnehmung
- 51: Oberschienenmittelabschnitt
- 52: Oberschienenflanke
- 53: Oberschienenendabschnitt
- 71: Endanschlag
- 72: Gleitblockholm
- 73: Gleitblocksprosse
- 74: Fixierungsnase
- 75: Anschlagende
- 91: Käfigmittelabschnitt
- 92: Kontaktabschnitt
- 93: Trägerabschnitt
- 94: erste Abstandsnasen
- 95: zweite Abstandsnasen

## Patentansprüche

1. Gleitblock (7) für ein Schienensystem (1) für einen Fahrzeugsitz, das Schienensystem (1) umfassend eine Unterschiene (3), eine entlang einer Längsachse (13) der Unterschiene (3) bewegbare Oberschiene (5) und wenigstens einen Wälzkörperkäfig (9), der an die Oberschiene (5) und über Wälzkörper (11) an die Unterschiene (3) gekoppelt ist, **dadurch gekennzeichnet, dass** der Gleitblock (7) zwei zueinander parallele Gleitblockholme (72), an denen die Oberschiene (5) bewegbar gelagert ist, wenigstens eine die beiden Gleitblockholme (72) leiterartig miteinander verbindende Gleitblocksprosse (73) und Endanschläge (71) für den wenigstens einen Wälzkörperkäfig (9) aufweist, wobei jeder Endanschlag (71) für einen Wälzkörperkäfig (9) nach außen von einem Gleitblockholm (72) absteht.

2. Gleitblock (7) nach Anspruch 1,
wobei wenigstens eine Gleitblocksprosse (73) eine von ihrer Unterseite abstehende Fixierungsnase (74) zur Fixierung der Position des Gleitblocks (7) an einer Unterschiene (3) des Schienensystems (1) aufweist.

3. Gleitblock (7) nach einem der vorhergehenden Ansprüche,
wobei der Gleitblock (7) aus einem Kunststoff gefertigt ist.

4. Schienensystem (1) für einen Fahrzeugsitz, das Schienensystem (1) umfassend eine Unterschiene (3), eine Oberschiene (5), einen gemäß einem der vorhergehenden Ansprüche ausgebildeten Gleitblock (7) und wenigstens einen Wälzkörperkäfig (9) mit Wälzkörpern (11), wobei
- der Gleitblock (7) starr mit der Unterschiene (3) verbunden ist,
- der Wälzkörperkäfig (9) relativ zu dem Gleitblock (7) parallel zu einer Längsachse (13) der Unterschiene (3) zwischen zwei durch Endanschläge (71) des Gleitblocks (7) definierten Endstellungen bewegbar und über die Wälzkörper (11) an die Unterschiene (3) gekoppelt ist,
- und die Oberschiene (5) an dem Gleitblock (7) entlang der Längsachse (13) der Unterschiene (3) bewegbar gelagert und an den Wälzkörperkäfig (9) gekoppelt ist.

5. Schienensystem (1) nach Anspruch 4,
wobei das Schienensystem (1) zwei Wälzkörperkäfige (9) mit Wälzkörpern (11) aufweist, die an sich gegenüberliegenden Seiten des Gleitblocks (7) angeordnet sind, jeweils relativ zu dem Gleitblock (7) parallel zu der Längsachse (13) der Unterschiene (3) zwischen zwei durch Endanschläge (71) des Gleitblocks (7) definierten Endstellungen bewegbar sind, und an die Oberschiene (5) und über die Wälzkörper (11) an die Unterschiene (3) gekoppelt sind.

6. Schienensystem (1) nach Anspruch 4 oder 5,
wobei jeder Wälzkörperkäfig (9) einen dem Gleitblock (7) zugewandten Kontaktabschnitt (92) aufweist, der zu der Längsachse (13) der Unterschiene (3) abgewinkelt ist, zwischen zwei Endanschlägen (71) des Gleitblocks (7) verläuft und in den beiden Endstellungen des Wälzkörperkäfigs (9) an jeweils einem der Endanschläge (71) anschlägt.

7. Schienensystem (1) nach Anspruch 6,
wobei zumindest ein Endanschlag (71), an dem ein Kontaktabschnitt (92) in einer Endstellung des Wälzkörperkäfigs (9) anschlägt, an einem Ende des Gleitblocks (7) angeordnet ist und ein rampenartiges Anschlagende (75) aufweist, das eine zu dem Ende des Gleitblocks (7) abfallende oberseitige Oberfläche aufweist, und dass der Kontaktabschnitt (92) aus einem elastisch verformbaren Material gefertigt ist, so dass der Kontaktabschnitt (92) beim Gleiten vom Ende des Gleitblocks (7) über das rampenartige Anschlagende (75) elastisch nach innen gebogen wird und nach Passieren des Endanschlags (71) wieder seine ursprüngliche Form annimmt.

8. Schienensystem (1) nach einem der Ansprüche 4 bis 7,
wobei die Unterschiene (3) einen Unterschienenboden (31) und für jeden Wälzkörperkäfig (9) eine von dem Unterschienenboden (31) abgewinkelte Unterschienenflanke (32) und einen von der Unterschienenflanke (32) nach innen und nach unten abgewinkelten Unterschienenendabschnitt (33) aufweist, und dass der Wälzkörperkäfig (9) sich in den Raumbereich zwischen der Unterschienenflanke (32) und dem Unterschienenendabschnitt (33) hinein erstreckt und die Wälzkörper (11) des Wälzkörperkäfigs (9) an dem nach innen abgewinkelten Bereich des Unterschienenendabschnitts (33) anliegen.

## Claims

1. Sliding block (7) for a rail system (1) for a vehicle seat, the rail system (1) comprising a lower rail (3), an upper rail (5) which is movable along a longitudinal axis (13) of the lower rail (3) and at least one rolling body cage (9) which is coupled to the upper rail (5) and via rolling bodies (11) to the lower rail (3), **characterized in that** the sliding block (7) comprises two sliding block beams (72) parallel to one another, the upper rail (5) being movably mounted thereon, at least one sliding block crossmember (73) connecting the two sliding block beams (72) to each other in the manner of a ladder, and end stops (71) for the at least one rolling body cage (9), wherein each end stop (71) for a rolling body cage (9) protrudes outwardly from a sliding block beam (72).

2. Sliding block (7) according to Claim 1, wherein at least one sliding block crossmember (73) comprises a fixing lug (74) protruding from its lower face for fixing the position of the sliding block (7) to a lower rail (3) of the rail system (1).

3. Sliding block (7) according to one of the preceding claims, wherein the sliding block (7) is produced from a plastics material.

4. Rail system (1) for a vehicle seat, the rail system (1) comprising a lower rail (3), an upper rail (5), a sliding block (7) configured according to one of the preceding claims and at least one rolling body cage (9) having rolling bodies (11), wherein
- the sliding block (7) is rigidly connected to the lower rail (3),
- the rolling body cage (9) is movable relative to the sliding block (7) parallel to a longitudinal axis (13) of the lower rail (3) between two end positions defined by end stops (71) of the sliding block (7) and is coupled to the lower rail (3) via the rolling bodies (11),
- and the upper rail (5) is mounted movably on the sliding block (7) along the longitudinal axis (13) of the lower rail (3) and is coupled to the rolling body cage (9).

5. Rail system (1) according to Claim 4, wherein the rail system (1) comprises two rolling body cages (9) having rolling bodies (11), which are arranged on opposing sides of the sliding block (7), which in each case are movable relative to the sliding block (7) parallel to the longitudinal axis (13) of the lower rail (3) between two end positions defined by end stops (71) of the sliding block (7) and which are coupled to the upper rail (5) and via the rolling bodies (11) to the lower rail (3).

6. Rail system (1) according to Claim 4 or 5, wherein each rolling body cage (9) comprises a contact portion (92) which faces the sliding block (7), which is angled relative to the longitudinal axis (13) of the lower rail (3), which contact portion (92) extends between two end stops (71) of the sliding block (7) and, in the two end positions of the rolling body cage (9), in each case comes into contact with one of the end stops (71).

7. Rail system (1) according to Claim 6, wherein at least one end stop (71), a contact portion (92) coming into contact therewith in an end position of the rolling body cage (9), is arranged at one end of the sliding block (7) and comprises a ramp-like stop end (75) which has a surface on the upper face which drops toward the end of the sliding block (7), and in that the contact portion (92) is produced from a resiliently deformable material so that, when sliding from the end of the sliding block (7) over the ramp-like stop end (75), the contact portion (92) is bent inwardly in a resilient manner and after passing the end stop (71) adopts its original shape again.

8. Rail system (1) according to one of Claims 4 to 7, wherein the lower rail (3) comprises a lower rail bottom portion (31) and for each rolling body cage (9) a lower rail flank (32) angled relative to the lower rail bottom portion (31), and a lower rail end portion (33) angled inwardly and downwardly from the lower rail flank (32), and in that the rolling body cage (9) extends into the spatial region between the lower rail flank (32) and the lower rail end portion (33), and the rolling bodies (11) of the rolling body cage (9) bear against the region of the lower rail end portion (33) which is angled inwardly.

## Revendications

1. Bloc coulissant (7) destiné à un système de rails (1) destiné à un siège de véhicule, le système de rails (1) comprenant un rail inférieur (3), un rail supérieur (5) mobile le long d'un axe longitudinal (13) du rail inférieur (3) et au moins une cage à éléments roulants (9) qui est accouplée au rail supérieur (5) et, par le biais d'éléments roulants (11), au rail inférieur (3), **caractérisé en ce que** le bloc coulissant (7) comporte deux longerons de bloc coulissant (72) parallèles l'un à l'autre sur lesquels le rail supérieur (5) peut être monté de manière mobile, au moins un échelon de bloc coulissant (73) reliant les deux longerons de bloc coulissant (72) l'un à l'autre à la manière d'une échelle et des butées d'extrémité (71) destinées à l'au moins une cage à éléments roulants (9), chaque butée d'extrémité (71) destinée à une cage à éléments roulants (9) faisant saillie vers l'extérieur depuis un longeron de bloc coulissant (72) .

2. Bloc coulissant (7) selon la revendication 1,
au moins un échelon de bloc coulissant (73) comportant un ergot de fixation (74) saillant depuis sa face inférieure et destiné à fixer la position du bloc coulissant (7) sur un rail inférieur (3) du système de rails (1).

3. Bloc coulissant (7) selon l'une des revendications précédentes,
le bloc coulissant (7) étant fabriqué à partir d'une matière synthétique.

4. Système de rails (1) destiné à un siège de véhicule, le système de rails (1) comprenant un rail inférieur (3), un rail supérieur (5), un bloc coulissant (7) conçu selon l'une des revendications précédentes et au moins une cage à éléments roulants (9) pourvue d'éléments roulants (11),
- le bloc coulissant (7) étant relié rigidement au rail inférieur (3),
- la cage à éléments roulants (9) étant mobile par rapport au bloc coulissant (7) parallèlement à un axe longitudinal (13) du rail inférieur (3) entre deux positions d'extrémité définies par des butées d'extrémité (71) du bloc coulissant (7) et accouplée au rail inférieur (3) par le biais des éléments roulants (11),
- et le rail supérieur (5) étant monté de manière mobile sur le bloc coulissant (7) le long de l'axe longitudinal (13) du rail inférieur (3) et étant accouplé à la cage à éléments roulants (9).

5. Système de rails (1) selon la revendication 4,
le système de rails (1) comportant deux cages à éléments roulants (9) pourvues d'éléments roulants (11) qui sont disposés sur des côtés opposés du bloc coulissant (7), qui sont chacune mobiles par rapport au bloc coulissant (7) parallèlement à l'axe longitudinal (13) du rail inférieur (3) entre deux positions d'extrémité définies par des butées d'extrémité (71) du bloc coulissant (7), et qui sont accouplées au rail supérieur (5) et, par le biais des éléments roulants (11), au rail inférieur (3).

6. Système de rails (1) selon la revendication 4 ou 5, chaque cage à éléments roulants (9) comportant une portion de contact (92) qui est dirigée vers le bloc coulissant (7), qui est inclinée par rapport à l'axe longitudinal (13) du rail inférieur (3), qui s'étend entre deux butées d'extrémité (71) du bloc coulissant (7) et qui vient buter dans chacune des deux positions d'extrémité de la cage à éléments roulants (9) contre l'une des butées d'extrémité (71).

7. Système de rails (1) selon la revendication 6,
au moins une butée d'extrémité (71), sur laquelle une portion de contact (92) vient buter dans une position d'extrémité de la cage à éléments roulants (9), étant disposée à une extrémité du bloc coulissant (7) et comportant une extrémité de butée (75) en forme de rampe qui comporte une surface supérieure inclinée vers l'extrémité du bloc coulissant (7) et la portion de contact (92) étant fabriquée à partir d'un matériau élastiquement déformable de sorte que la portion de contact (92) est pliée élastiquement vers l'intérieur lorsqu'elle glisse depuis l'extrémité du bloc coulissant (7) sur l'extrémité de butée (75) en forme de rampe et reprenne sa forme initiale après avoir passé la butée d'extrémité (71).

8. Système de rails (1) selon l'une des revendications 4 à 7,
le rail inférieur (3) comportant une base de rail inférieur (31) et, pour chaque cage à éléments roulants (9), un flanc de rail inférieur (32) incliné depuis la base de rail inférieur (31) et une portion d'extrémité de rail inférieur (33) inclinée vers l'intérieur et vers le bas depuis le flanc de rail inférieur (32), et la cage à éléments roulants (9) s'étendant dans l'espace ménagé entre le flanc de rail inférieur (32) et la portion d'extrémité de rail inférieur (33) et les éléments roulants (11) de la cage à éléments roulants (9) venant en appui sur la région, inclinée vers l'intérieur, de la portion d'extrémité de rail inférieur (33).
